# EUROPEAN PATENT APPLICATION

(11) **EP 4 535 797 A1**
(43) Date of publication of application: **09.04.2025**
(21) Application number: 24020216.8
(22) Date of filing: 27.06.2024
(51) Int. Cl.: H04N 21/258, H04N 21/472

(54) **SYSTEM AND RELATED METHOD FOR PERSONALIZED VIDEO INTERACTION SESSIONS**

(30) Priority: 03.10.2023 GB 202315146
(71) Applicant: Lambda Partnership Ltd, Sutterton Boston PE20 2JH (GB)
(72) Inventor: CLARKE, Michael, Sutterton, Boston PE20 2JH (GB); BATCHELER, Mark, Sutterton, Boston PE20 2JH (GB)

(57) **Abstract**

The disclosed invention pertains to a multifaceted video interaction system designed to simulate conversations between a user and a customer. The system compiles a set of video recordings, segmented and categorized per individual interactions, and stores them in a database. These recordings are accessible using unique visual codes associated with specific persons and can simulate different interactions with those persons, each with their respective structures and intents. The system employs audio triggers to activate predefined responses, ensuring interactions feel specific and personalized.

## Description

### Field of Invention.

The present invention relates generally to video interaction technologies. More specifically, it pertains to a system designed for compiling, storing, and retrieving personalized video recordings to simulate interactive conversations between users and the individual in the recordings, employing unique visual codes and audio triggers.

### Background

Platforms exist in the current day that enable individuals to leave behind a compilation of static videos, typically referred to as a "Vault," allowing the person to share their thoughts and memories with their family and friends posthumously. These solutions, while serving as repositories of one's life experiences and thoughts, predominantly offer a unidirectional interaction, lacking the ability to engage users in a dynamic conversation. This limitation severely constrains the user experience, preventing loved ones from experiencing a more genuine and lifelike interaction with the deceased.

In addition, social media platforms have become prevalent in offering the ability to record and disseminate thoughts. These platforms, however, are designed for a broad spectrum of interaction and are not specialized to accommodate the needs of bereavement support or to act as a dedicated space for interactive video legacies. Furthermore, the interactions on such platforms remain essentially static and non-interactive, often shared with a wide audience, diminishing the personal and intimate nature that bereavement requires.

Due to their impersonal nature, these prior art solutions are unable to provide tailored responses, which can address specific queries or inputs from the users, limiting the engagement to pre-recorded messages with no adaptability or personalization. This absence of dynamism renders the experience less authentic, often leaving users yearning for a more genuine connection.

Prior art patent US11107465B2 discloses a multi-media interactive story-telling system that provides conversational interactions between a human user and a contributor who appears in multi-media recordings. The multi-media interactive story-telling system includes an intake device for recording interview sessions in which a contributor tells a life story about her life experience. The contributor may rely on a script when creating the life story. The multi-media interactive story-telling system further comprises storage devices for storing the recorded interview sessions and processors for organizing the recorded interview sessions. The multi-media interactive story-telling system further comprises an interactive device for retrieving and playing a recorded interview session in response to a query from a user.

In this prior art solution, after an input phrase has been used the answer given by the customer will always be the same regardless of which end user is asking the question. Furthermore, the solution is aimed at sharing videos to a large audience to make thoughts and opinions widely available, and so does not include features for enabling personalized conversations with specific loved ones.

It is within this context that the present invention is provided.

### Summary

This invention pertains to a system developed to offer a personalized interactive video service. The system enables communication between one or more user devices, each outfitted with a display screen and a microphone, a database designed to store customer profiles which include information and image data, and one or more servers in communication with the said database. The system is engineered to facilitate interaction between users and a subset of stored video recordings of a deceased customer that they may gain access to via a unique visual code such as a QR code associated with themselves. Once access is gained, the user may have various authentic and personalized interactions with their deceased loved one, causing appropriate video recordings to be played through predefined audio triggers and classification tags.

Thus, according to a first aspect of the present disclosure, there is provided a system for providing a personalised interactive video service, the system comprising: one or more user devices, each user device comprising a display screen and a microphone; a database, the database being configured to store information and image data for one or more customer profiles; and one or more servers in communication with the database.

The one or more servers are configured to: receive a set of customer data and associate the customer data with a customer profile, the customer data including: personal information of the customer and image data comprising a plurality of video recordings of the customer, wherein each video recording has an associated predefined audio trigger, one or more classification tags, and is associated with one or more individuals; store the video recordings in the database, the video recordings being divided into subsets associated with each of the one or more individuals; generate a unique visual code associated with each subset of video recordings; receive a request from a user device to access a subset of video recordings associated with one of the unique visual codes; grant access to the subset of video recordings associated with that unique visual code and open an interactive video session with the requesting user device; receive an audio input from the user device; match the audio input with one or more of the predefined audio triggers of the video recordings within the subset for the associated visual code to identify a matching audio trigger; and play one of the video recordings associated with the matching audio trigger on the user device.

In some embodiments, the set of customer data further comprises one or more additional video recordings of the customer providing generic responses, and the one or more servers are configured to play the one or more additional video recordings in response to a set of associated event triggers.

In such embodiments, the event triggers may include one or more of:
a) the initiation of an interactive video session, in response to which a greeting video recording is played;
b) the conclusion of an interactive video session, in response to which a goodbye video recording is played;
c) no matching audio trigger being identified for an audio input, in response to which a request for clarification video recording is played;
d) identification of a violation of terms of service, in response to which a warning video recording is played;
e) the initiation of the first interactive video session for a given unique visual code, in response to which a tutorial video is played.

In some embodiments,a subset of the video recordings have a time capsule classification tag, video recordings with said classification tag having additional data associated with them including an indicated date at which the video is to be made available to a given individual and contact data for said individual, the one or more servers being further configured to send a notification to the individual using the associated contact data on the indicated date.

In some embodiments, a subset of the video recordings have a game playing classification tag, video recordings with said classification tag having additional data associated with them including a set of rules and game triggers for determining a sequence and/or selection of said videos to play in response to a user requesting to play a game in their interactive video session.

In some embodiments, the set of customer data further comprises one or more additional video recordings of a static loop of the customer, and the one or more servers are configured to play this loop during an interactive video session when no other video recording is being played.

In some embodiments, if multiple matching audio triggers are identified for a given audio input, the one or more servers are further configured to present a list of the associated video recording options on the user device interface, allowing a user to select the video recording to be played.

In some embodiments, prior to granting access to the requesting user device, the one or more servers are further configured to verify the identity of the requesting user by one of: biometric verification, pin number verification, or requesting confirmation of personal details of the customer.

In some embodiments, the one or more servers are further configured, following the generation of the unique visual codes, to generate a document listing each of the named individuals in the customer dataset with their respective unique visual codes.

In some embodiments, the one or more servers are further configured, prior to storing the video recordings in the database and in response to receiving the customer dataset, present the one or more video recordings to a system operator for feedback, transmit the feedback to a user device of the customer, and receive a second set of updated video recordings facilitating the iterative improvement of the video recordings.

In some embodiments, during the interactive video session the one or more servers are further configured apply a dynamic fade transition between different video recordings.

In some embodiments, the customer data set further comprises an indication for each video recording of whether said recording is private or shareable.

In some embodiments, the customer data set further comprises one or more accompanying media files associated with a video recording, and wherein the one or more servers are configured to display the accompanying media files for said video recording on the user device when the video recording is played.

In some embodiments, the one or more servers are further configured to provide the requesting user device with a list of available audio triggers for a given interactive video session.

### Brief Description of the Drawings

Various embodiments of the invention are disclosed in the following detailed description and accompanying drawings.
FIG.1 illustrates a process flow chart for an example method carried out according to the present disclosure.
FIG.2A, 2B, 2C, and 2D show various example user interfaces for enabling a customer to set up their video recording library for their loved ones.

Common reference numerals are used throughout the figures and the detailed description to indicate like elements. One skilled in the art will readily recognize that the above figures are examples and that other architectures, modes of operation, orders of operation, and elements/functions can be provided and implemented without departing from the characteristics and features of the invention, as set forth in the claims.

### Detailed Description and Preferred Embodiment

The following is a detailed description of exemplary embodiments to illustrate the principles of the invention. The embodiments are provided to illustrate aspects of the invention, but the invention is not limited to any embodiment. The scope of the invention encompasses numerous alternatives, modifications and equivalent; it is limited only by the claims.

Numerous specific details are set forth in the following description in order to provide a thorough understanding of the invention. However, the invention may be practiced according to the claims without some or all of these specific details. For the purpose of clarity, technical material that is known in the technical fields related to the invention has not been described in detail so that the invention is not unnecessarily obscured.

### DEFINITIONS:

The terminology used herein is for the purpose of describing particular embodiments only and is not intended to be limiting of the invention.

As used herein, the term "and/or" includes any combinations of one or more of the associated listed items.

As used herein, the singular forms "a," "an," and "the" are intended to include the plural forms as well as the singular forms, unless the context clearly indicates otherwise.

It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The terms "first," "second," and the like are used herein to describe various features or elements, but these features or elements should not be limited by these terms. These terms are only used to distinguish one feature or element from another feature or element. Thus, a first feature or element discussed below could be termed a second feature or element, and similarly, a second feature or element discussed below could be termed a first feature or element without departing from the teachings of the present disclosure.

### DESCRIPTION OF DRAWINGS

In accordance with the invention disclosed herein, a system is detailed that facilitates a personalized interactive video service. The disclosed system is adept at acquiring customer data and associating said data with a corresponding customer profile. The customer data comprise personal information and a plethora of video recordings, each coupled with predefined audio triggers, classification tags, and associations with one or more individuals. The embodiment of this invention allows the storage of these video recordings in a designated database, categorizing them into subsets corresponding to the associated individuals.

The essence of this invention lies in its capacity to generate unique visual codes (i.e. QR codes) for each subset of video recordings, thus enabling a user device to request access to a particular subset using the associated visual code. Upon receiving such requests, the system grants access and initiates an interactive video session, within which the system processes audio inputs to identify matching audio triggers and plays the corresponding video recording on the user device.

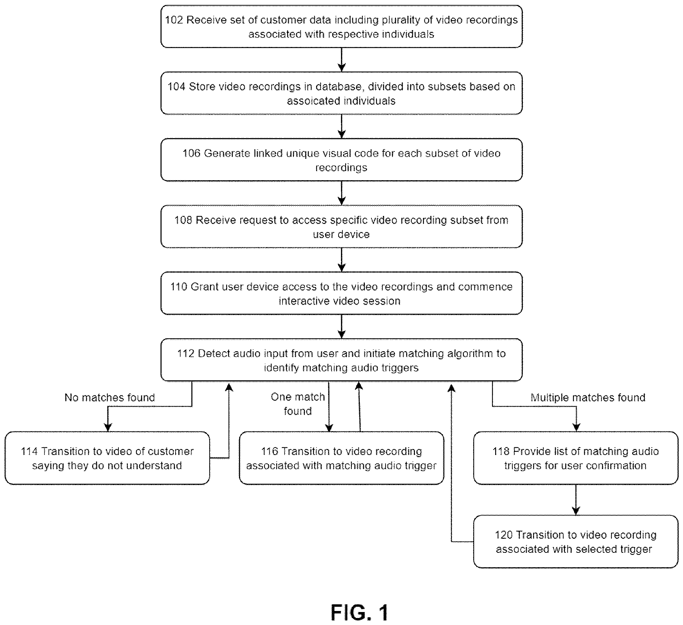

FIG.1 is a flowchart showing a method to manage and provide access to interactive video sessions as carried out by the servers of the disclosed system.

In this method, the initial step involves receiving a set of customer data and associating the received customer data with a customer profile 102. The customer data includes personal information of the customer and image data. The image data includes a multitude of video recordings of the customer. Each of these video recordings is attributed with an associated predefined audio trigger, is categorized with one or more classification tags, and is linked with one or more individuals (the loved ones of the user) which it is intended to be played to.

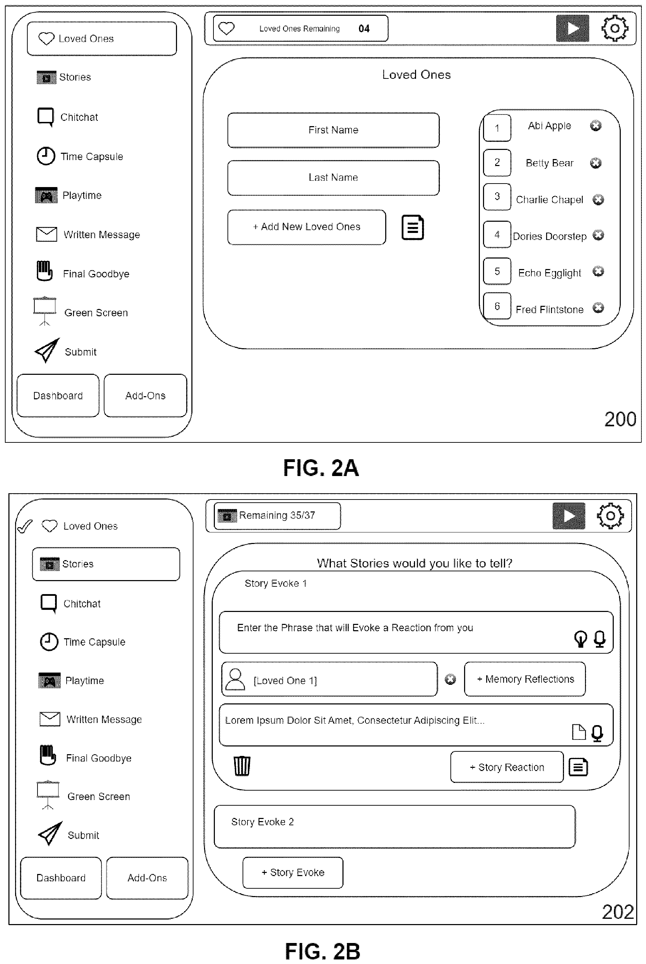

In general, this data, alongside other customer data, may be uploaded to the customer profile via a web page interface of an online platform as illustrated in FIGs 2A-2D. The image data may include video clips of the customer saying various phrases, telling stories, and participating in other interactions that they wish to be made possible for their loved ones to experience once they are gone.

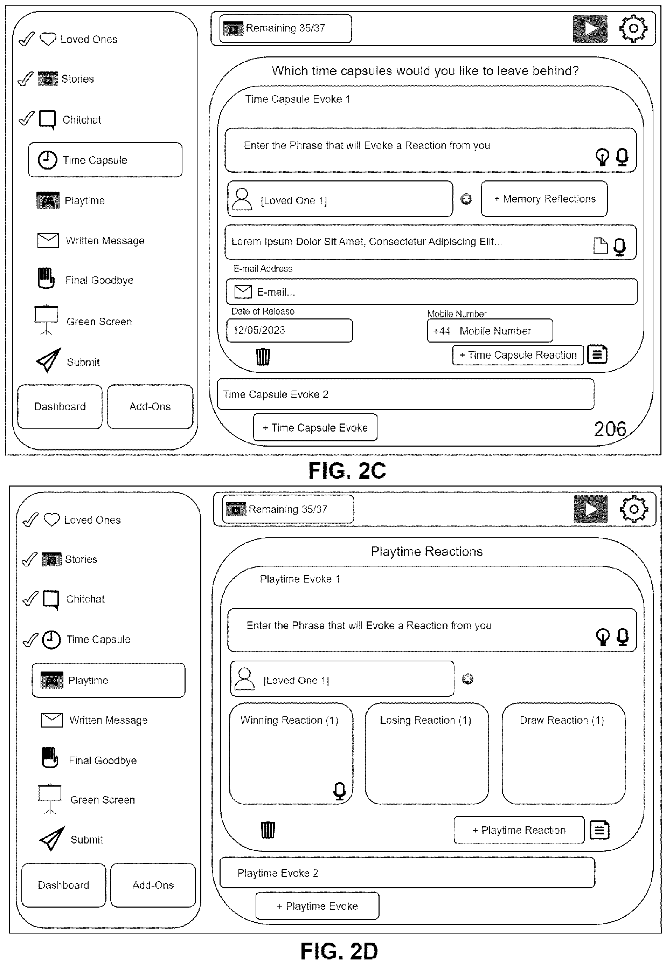

The interactions are divided into different types, which incorporate different types of video recording. In one example the types of interaction include the following:
- FIG.2B - Stories (Long-form videos) allow customers to either tell a story about themself, or a story about the end user that is interacting with them. These types of upload can include "memory reflections" which are accompanying photos or videos that can be displayed whilst the customer talks about a specific memory or event.
- Chit-Chats (Short-form videos) allow users to have brief conversational moments with the customer, and generally include short conversational phrases such as "Hi", "Goodnight", "How are you feeling?"
- FIG.2C - Time Capsules (Long-form videos) that will only be activated for an individual end user on a predefined date. Video recordings with said classification tag having additional data associated with them including an indicated date at which the video is to be made available to a given individual and contact data for said individual, the one or more servers being further configured to send a notification to the individual using the associated contact data on the indicated date.
- FIG.2D - Game Playing - Allowing end users to play a game of Rock/Paper/Scissors with the customer. This is activated with speech (for example "lets play Rock, Paper, Scissors"). Video recordings with said classification tag having additional data associated with them including a set of rules and game triggers for determining a sequence and/or selection of said videos to play in response to a user requesting to play a game in their interactive video session.

The main objective of all conversational methods is to ensure that the video recordings from the customer are specific to the user accessing the video recording, rather than being a general answer to a general question. For example, a Son, Daughter, Brother and a Sister may each ask "what is your favorite memory of me?" they would each receive their own unique answer. Though it will be understood that some video recordings will be appropriate to play to multiple individuals.

The subsequent step in the method involves storing the video recordings in the database 104. The video recordings are compartmentalized into subsets, each being associated with one or more of the connected individuals. When the customer dies, A QR code for each of these subsets will be made available to the respective individual, allowing them to access a personalized database of interactions with the deceased to facilitate authentic interactions.

Following the storage, the method proceeds to generate the unique visual code 106 for each subset of video recordings. This code serves as a distinctive identifier and an access key for the related subset of video recordings.

Generally, the end users (i.e. the customer's loved ones who they are leaving messages for) gain access to the visual codes for accessing the video recording subsets associated with them in the database when a customer dies - for example the visual codes may be QR codes provided to each loved one alongside the customer's will.

When the user scans their QR code with a user device to access their video subset, the user device automatically sends a request 108 to access the subset of video recordings associated with that QR code.

Upon receiving the request, the servers grant access 110 to the subset of video recordings related to the unique visual code and commence an interactive video session with the user device placing the request. This step establishes a real-time, interactive connection between the user and the video recordings.

In some examples, prior to granting access to the requesting user device, the servers may require the user to verify their identity by one of: biometric verification, pin number verification, or by providing confirmation of personal details of the deceased such as their date of birth.

Once the interactive video session has begun, the servers listen for audio inputs from the user device in order to play specific video recordings from the subset in the database.

In order to improve the smoothness and authentic feel of the interactive video session, the deceased customer may also have recorded a number of phrases for more generic event triggers. In such examples, the system may be configured to begin the session by playing a "greeting video" of the customer saying hello, followed by a "Loop" video, such as a static video of the customer looking at or smiling at the camera awaiting verbal input from the user.

Other examples of image data that can be included for video smoothness and generic event triggers include:
- Introduction videos - This is a video of the customer telling their users how the app works, to be played whena user first accesses their QR code.
- Don't Understand - This is what the customer will say if the audio trigger is not recognized by the matching algorithm.
- Profanity - This is what the customer will say if the users swears.
- Goodbye Video - This is a separate video used outside of the app that can be played during a customers funeral or wake.
- Still image - An image of the customer may be used to implement the dynamic video transitions in the interactive video sessions.

The user interface of the user device may have a microphone icon which, when pressed by a user, causes the user device to listen to the User for their verbal input. The verbal input from the user may be displayed on screen, at which point the user device conveys the audio input 112 to the servers. This audio input serves as a trigger from the user, which is then processed by a matching algorithm to search the one or more of the predefined audio triggers associated with the video recordings within the subset of videos.

Based on the outcome of the matching algorithm, several things can happen:
a) No matching Audio trigger is found. This will cause the "Loop" video to dynamically fade into another video of the customer saying that they do not understand the verbal input 114.
b) A matching audio trigger is found for a story, chit-chat or available time capsule. This will cause the "Loop" video to dynamically fade into the relevant video recording video for that story, chit-chat or available time capsule 116.
c) A matching audio trigger is found for a playtime interaction. This will cause the "Loop" video to dynamically fade into the relevant playtime video of the customer agreeing to a game 118.
d) Multiple matches are found. This will cause a popup to be displayed because multiple matches have been found. The user can then pick which Audio trigger was the correct one 120.

In order to make the users aware of the Audio triggers that are available to them, the user device may display the available Audio triggers within an "Interactions" page. These audio triggers can also be sent to the user when they first access the system so that they can have them available externally and not have to keep navigating back to the "Interactions" screen.

FIG.2A shows a user interface 200 for a customer to specify their Loved Ones (i.e. the users who will gain access to the video recordings).

FIG.2B shows a user interface 202 for a customer to upload video recordings of the Stories category.

Customers can use the Stories page to:
- Define an Audio trigger that has different video recordings for different users. For example, if the customer had 2 children they might enter an Audio trigger as "What was your favourite memory of me" (Which the children would then eventually ask in the app) and the customer can give different answers for each child.
- Define an Audio trigger that has a single video recording for many users. The most likely use case for this is when a customer wants to talk about themself. For example, the customer might want to talk about their own funniest memory and so the audio trigger would be "What is your funniest memory?". The customer could then make this available to all of their users.

The Chit-chats functioning and user interface are practically identical to the Stories mechanisms, so are not shown in a separate figure.

Video recordings on the chit-chat page are intentionally designed to be short form. An example of an Audio trigger on this page would be "Hello" or "Goodbye". The customer might choose to react the same for all users or might want to have different video recordings for different people (Such as "Hello [x]" and "Hello [y]")

FIG.2C shows a user interface 204 for a customer to upload videos in the "Time Capsules" category.

Customers can use the Time Capsules page to:
- Define an Audio trigger that has different video recordings for different users. The most likely use case for this is when a customer wants to wish their users well on their birthday. For example, if the customer had 2 children they might enter an Audio trigger as "Play my 21st birthday message please" (This children would ask this in the app on their video release date) and the customer could wish each child well on independent dates.
- Define several audio triggers for a single user each with a single video recording but at regular intervals. For example, a customer might want to leave a message to his wife each year on their anniversary for a few years running

FIG.2D shows a user interface 206 for a customer upload video recordings in the "Play Time" category.

Customers can use the Play Time page to set up any number of games. One specific example provided herein is the game of Rock, Paper, Scissors.

In such an example, when customers reach the playtime page, they will define their game of Rock, Paper, Scissors.

The audio trigger is used to define what a user needs to say in order to trigger the game when they are using the app. The video recordings are what the customer will actually say when they win, lose or draw. Customers can specify several different "Win, Lose and Draw" video recordings so that they do not react the same way every time after the game has finished.

### NETWORK COMPONENTS

The disclosed system may operate over any suitable network architecture, but in general will be carried out by a set of servers operating within a cloud infrastructure.

A server as described herein can be any suitable type of computer. A computer may be a uniprocessor or multiprocessor machine. Accordingly, a computer may include one or more processors and, thus, the aforementioned computer system may also include one or more processors. Examples of processors include sequential state machines, microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), gated logic, programmable control boards (PCBs), and other suitable hardware configured to perform the various functionality described throughout this disclosure.

Additionally, the computer may include one or more memories. Accordingly, the aforementioned computer systems may include one or more memories. A memory may include a memory storage device or an addressable storage medium which may include, by way of example, random access memory (RAM), static random access memory (SRAM), dynamic random access memory (DRAM), electronically erasable programmable read-only memory (EEPROM), programmable read-only memory (PROM), erasable programmable read-only memory (EPROM), hard disks, floppy disks, laser disk players, digital video disks, compact disks, video tapes, audio tapes, magnetic recording tracks, magnetic tunnel junction (MTJ) memory, optical memory storage, quantum mechanical storage, electronic networks, and/or other devices or technologies used to store electronic content such as programs and data. In particular, the one or more memories may store computer executable instructions that, when executed by the one or more processors, cause the one or more processors to implement the procedures and techniques described herein. The one or more processors may be operably associated with the one or more memories so that the computer executable instructions can be provided to the one or more processors for execution. For example, the one or more processors may be operably associated to the one or more memories through one or more buses. Furthermore, the computer may possess or may be operably associated with input devices (e.g., a keyboard, a keypad, controller, a mouse, a microphone, a touch screen, a sensor) and output devices such as (e.g., a computer screen, printer, or a speaker).

The computer may advantageously be equipped with a network communication device such as a network interface card, a modem, or other network connection device suitable for connecting to one or more networks.

A computer may advantageously contain control logic, or program logic, or other substrate configuration representing data and instructions, which cause the computer to operate in a specific and predefined manner as, described herein. In particular, the computer programs, when executed, enable a control processor to perform and/or cause the performance of features of the present disclosure. The control logic may advantageously be implemented as one or more modules. The modules may advantageously be configured to reside on the computer memory and execute on the one or more processors. The modules include, but are not limited to, software or hardware components that perform certain tasks. Thus, a module may include, by way of example, components, such as, software components, processes, functions, subroutines, procedures, attributes, class components, task components, object-oriented software components, segments of program code, drivers, firmware, micro code, circuitry, data, and/or the like.

The control logic conventionally includes the manipulation of digital bits by the processor and the maintenance of these bits within memory storage devices resident in one or more of the memory storage devices. Such memory storage devices may impose a physical organization upon the collection of stored data bits, which are generally stored by specific electrical or magnetic storage cells.

The control logic generally performs a sequence of computer-executed steps. These steps generally require manipulations of physical quantities. Usually, although not necessarily, these quantities take the form of electrical, magnetic, or optical signals capable of being stored, transferred, combined, compared, or otherwise manipulated. It is conventional for those skilled in the art to refer to these signals as bits, values, elements, symbols, characters, text, terms, numbers, files, or the like. It should be kept in mind, however, that these and some other terms should be associated with appropriate physical quantities for computer operations, and that these terms are merely conventional labels applied to physical quantities that exist within and during operation of the computer based on designed relationships between these physical quantities and the symbolic values they represent.

It should be understood that manipulations within the computer are often referred to in terms of adding, comparing, moving, searching, or the like, which are often associated with manual operations performed by a human operator. It is to be understood that no involvement of the human operator may be necessary, or even desirable. The operations described herein are machine operations performed in conjunction with the human operator or user that interacts with the computer or computers.

It should also be understood that the programs, modules, processes, methods, and the like, described herein are but an exemplary implementation and are not related, or limited, to any particular computer, apparatus, or computer language. Rather, various types of general-purpose computing machines or devices may be used with programs constructed in accordance with some of the teachings described herein. In some embodiments, very specific computing machines, with specific functionality, may be required.

Unless otherwise defined, all terms (including technical terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

The disclosed embodiments are illustrative, not restrictive. While specific configurations of the system and related methods have been described in a specific manner referring to the illustrated embodiments, it is understood that the present invention can be applied to a wide variety of solutions which fit within the scope and spirit of the claims. There are many alternative ways of implementing the invention.

It is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A system for providing a personalised interactive video service, the system comprising:
one or more user devices, each user device comprising a display screen and a microphone;
a database, the database being configured to store information and image data for one or more customer profiles; and
one or more servers in communication with the database, the one or more servers being configured to:
receive a set of customer data and associate the customer data with a customer profile, the customer data including: personal information of the customer and image data comprising a plurality of video recordings of the customer, wherein each video recording has an associated predefined audio trigger, one or more classification tags, and is associated with one or more individuals;
store the video recordings in the database, the video recordings being divided into subsets associated with each of the one or more individuals;
generate a unique visual code associated with each subset of video recordings;
receive a request from a user device to access a subset of video recordings associated with one of the unique visual codes;
grant access to the subset of video recordings associated with that unique visual code and open an interactive video session with the requesting user device;
receive an audio input from the user device;
match the audio input with one or more of the predefined audio triggers of the video recordings within the subset for the associated visual code to identify a matching audio trigger; and
play one of the video recordings associated with the matching audio trigger on the user device.

2. The system of claim 1, wherein the set of customer data further comprises one or more additional video recordings of the customer providing generic responses, and the one or more servers are configured to play the one or more additional video recordings in response to a set of associated event triggers.

3. The system of claim 2, wherein the event triggers include one or more of:
a) the initiation of an interactive video session, in response to which a greeting video recording is played;
b) the conclusion of an interactive video session, in response to which a goodbye video recording is played;
c) no matching audio trigger being identified for an audio input, in response to which a request for clarification video recording is played;
d) identification of a violation of terms of service, in response to which a warning video recording is played;
e) the initiation of the first interactive video session for a given unique visual code, in response to which a tutorial video is played.

4. The system of claim 1, wherein a subset of the video recordings have a time capsule classification tag, video recordings with said classification tag having additional data associated with them including an indicated date at which the video is to be made available to a given individual and contact data for said individual, the one or more servers being further configured to send a notification to the individual using the associated contact data on the indicated date.

5. The system of claim 1, wherein a subset of the video recordings have a game playing classification tag, video recordings with said classification tag having additional data associated with them including a set of rules and game triggers for determining a sequence and/or selection of said videos to play in response to a user requesting to play a game in their interactive video session.

6. The system of claim 1, wherein the set of customer data further comprises one or more additional video recordings of a static loop of the customer, and the one or more servers are configured to play this loop during an interactive video session when no other video recording is being played.

7. The system of claim 1, wherein if multiple matching audio triggers are identified for a given audio input, the one or more servers are further configured to present a list of the associated video recording options on the user device interface, allowing a user to select the video recording to be played.

8. The system of claim 1, wherein prior to granting access to the requesting user device, the one or more servers are further configured to verify the identity of the requesting user by one of: biometric verification, pin number verification, or requesting confirmation of personal details of the customer.

9. The system of claim 1, wherein the one or more servers are further configured, following the generation of the unique visual codes, to generate a document listing each of the named individuals in the customer dataset with their respective unique visual codes.

10. The system of claim 1, wherein the one or more servers are further configured, prior to storing the video recordings in the database and in response to receiving the customer dataset, present the one or more video recordings to a system operator for feedback, transmit the feedback to a user device of the customer, and receive a second set of updated video recordings facilitating the iterative improvement of the video recordings.

11. The system of claim 1, wherein during the interactive video session the one or more servers are further configured apply a dynamic fade transition between different video recordings.

12. The system of claim 1, wherein the customer data set further comprises an indication for each video recording of whether said recording is private or shareable.

13. The system of claim 1, wherein the customer data set further comprises one or more accompanying media files associated with a video recording, and wherein the one or more servers are configured to display the accompanying media files for said video recording on the user device when the video recording is played.

14. The system of claim 1, wherein the one or more servers are further configured to provide the requesting user device with a list of available audio triggers for a given interactive video session.
